# EUROPÄISCHE PATENTSCHRIFT

(11) **EP 2 306 045 B1**
(45) Veröffentlichungstag und Bekanntmachung des Hinweises auf die Patenterteilung: **19.11.2014**
(21) Anmeldenummer: 10176363.9
(22) Anmeldetag: 13.09.2010
(51) Int. Cl.: F16G 1/28

(54) **Antriebsriemen, insbesondere Zahnriemen, mit Basaltzugstrang**
Drive belt, in particular tooth belt, with basalt tension member
Courroie d'entraînement, notamment courroie dentée, dotée d'un faisceau de traction en basalte

(30) Priorität: 01.10.2009 DE 102009044153
(43) Veröffentlichungstag der Anmeldung: 06.04.2011
(73) Patentinhaber: ContiTech Antriebssysteme GmbH, 30165 Hannover (DE)
(72) Erfinder: Kanzow, Henning, Dr., 30519 Hannover (DE); Obert, Markus, 30457 Hannover (DE); Unruh, Axel, 30655 Hannover (DE); Teves, Reinhard, Dr., 30926 Seelze (DE)
(74) Vertreter: Finger, Karsten

(56) Entgegenhaltungen:
- EP-A2- 0 777 066
- WO-A2-2006/103377
- DE-T2- 69 920 106
- US-A- 3 981 206
- Alexander Fluegel: "Glass composition, glass types", , 5. März 2007 (2007-03-05), XP002684387, Gefunden im Internet: URL:http://glassproperties.com/glasses/ [gefunden am 2012-09-28]
- ASM International: "ASM HB, Vol. 21, Composites", , 16. Oktober 2001 (2001-10-16), XP002684388, Gefunden im Internet: URL:http://www.asminternational.org/conten t/ASM/StoreFiles/06781G_p27-34.pdf [gefunden am 2012-09-28]

## Beschreibung

Die Erfindung betrifft einen Antriebsriemen mit einem Grundkörper aus einem polymeren Werkstoff mit elastischen Eigenschaften, umfassend eine Decklage als Riemenrücken sowie einen Unterbau mit einer Kraftübertragungszone, wobei
- nach einer ersten Variante in dem Grundkörper wenigstens ein Zugstrang in Cordkonstruktion eingebettet ist oder
- nach einer zweiten Variante zwischen der Decklage und dem Unterbau eine Zwischenlage aus einem polymeren Werkstoff mit elastischen Eigenschaften angeordnet ist, wobei in der Zwischenlage wenigstens ein Zugstrang in Cordkonstruktion eingebettet ist; oder
- nach einer dritten Variante wenigstens ein Zugstrang in Cordkonstruktion eine Cordlage bildet, wobei zwischen der Cordlage und der Decklage und/oder zwischen der Cordlage und dem Unterbau eine Zwischenlage aus einem polymeren Werkstoff mit elastischen Eigenschaften angeordnet ist.

Die Cordkonstruktion eines Zugstranges basiert dabei auf einer Gruppe von anorganischen Filamenten, die eine Litze bilden, wobei wiederum eine Gruppe von Litzen den Cord bilden. Hinsichtlich dieser cordspezifischen Begriffe wird insbesondere auf die Offenlegungsschrift DE 10 2004 044 793 A1 verwiesen.

Antriebsriemen, die auch als Kraftübertragungsriemen bezeichnet werden und im Funktionszustand endlos geschlossen sind, können als Flachriemen, Keilriemen, Keilrippenriemen, Zahnriemen und Kupplungsriemen ausgebildet sein. Von besonderer Bedeutung sind der Keilrippenriemen und der Zahnriemen, wobei diesbezüglich auf folgende Patentliteratur verwiesen wird:

| Keilrippenriemen | Zahnriemen |
|---|---|
| DE 38 23 157 A1 | EP 0 599 145 B1 |
| DE 100 16 351 A1 | EP 0 737 228 B1 |
| DE 10 2006 007 509 A1 | EP 0 866 834 B1 |
| EP 0 590 423 A2 | EP 1 088 177 B1 |
| EP 0 737 228 B1 | EP 1 129 308 B1 |
| EP 0 831 247 B1 | EP 1 795 645 A1 |
| EP 0 866 834 B1 | WO 2005/080821 A1 |
| EP 1 108 750 A1 | WO 2006/066669 A1 |
| EP 1 129 308 B1 | US 5 417 618 |
| WO 2009/066492 A1 | JP 2008-291395 A |
| US 3 981 206 | |
| US 5 026 327 | |
| US 2003/0121729 A1 | |

Die Biegeelastizität eines Antriebsriemens wird dadurch erreicht, dass der Grundkörper und somit die Decklage und der Unterbau aus einem polymeren Werkstoff mit elastischen Eigenschaften bestehen, wobei hier insbesondere die beiden Werkstoffgruppen Elastomere und thermoplastische Elastomere zu nennen sind. Von besonderer Bedeutung sind Elastomere auf der Basis einer vulkanisierten Kautschukmischung.

Der Antriebsriemen ist mit wenigstens einem in Riemenlängsrichtung verlaufenden eingebetteten Zugstrang nach einer der drei eingangs genannten versehen, wobei insbesondere mehrere Zugstränge eine Festigkeitsträgerlage bzw. Zugträgerlage bilden.

Von besonderer Bedeutung ist dabei ein Zugstrang in Cordkonstruktion, wobei es diesbezüglich nach dem Stand der Technik verschiedenen Werkstoffkonzeptionen gibt. Die wesentlichen Werkstofftypen sind: Stahl, Polyamid (PA), Aramid, Polyester, Glasfasern, Kohlefasern, Polyetheretherketon (PEEK), Polyethylentherephthalat (PET) oder Polyethylen-2,6-naphtalat (PEN).

Im folgenden Abschnitt wird auf die Zugstrangtechnologie von Zahnriemen näher eingegangen.

Zahnriemen benötigen einen Zugstrang, der sich durch eine hohe Steifigkeit auszeichnet. Weiterhin müssen die Zugstränge eine hohe Festigkeit und einen geringen Abfall der Festigkeit nach Laufzeit aufweisen. Für manche Anwendungen, insbesondere in Ölumgebung, ist ein Zugstrang mit einer hohen Chemikalien-/Säureresistenz erwünscht. Zahnriemen verfügen zumeist über Zugstränge aus Glasfasern, wie bspw. in DE 699 20 106 T2 oder EP 0 777 066 A2 beschrieben, insbesondere aus E-Glas. Technisch besser wegen ihrer größeren Festigkeit und geringen Abfall der Festigkeit nach Laufzeit wären Zugstränge auf der Basis von S-, K- oder U-Glas. Diese Werkstoffe sind jedoch teuer und zeigen somit unter dem wirtschaftlichen Aspekt ihre Grenzen auf.

In der Offenlegungsschrift JP 2008-291395 A werden Gummiartikel vorgestellt, die mit Basaltfasern, einem Gemisch aus Metall- und Siliciumoxiden, verstärkt sind. Angesprochen wird dabei auch der Zahnriemen mit Zugsträngen aus Basalt-Faser-Filamenten, die zusätzlich mit Resorcin-Formaldeyd-Latex (RFL) präpariert sind.

Die Aufgabe der Erfindung besteht nun darin, die Zugstrangtechnologie gemäß JP 2008-291395 A auf der Basis eines Gemisches aus Metall- und Siliciumoxiden derart weiterzuentwickeln, dass ein Antriebsriemen, insbesondere ein Zahnriemen, bereitgestellt werden kann, dessen Zugstrang auf der Basis einer Cordkonstruktion sich durch eine hohe Festigkeit bei Dauerbelastung sowie durch eine hohe Beständigkeit gegenüber allen Medien, insbesondere gegenüber Ölen und Chemikalien, auszeichnet. Darüber hinaus soll die neue Zugstrangkonzeption eine wirtschaftliche Basis haben.

Gelöst wird diese Aufgabe dadurch, dass
- die Litzen eines Cordes eine maximale Längendifferenz von ≤ 3 % aufweisen und
- die Filamente aus wenigstens folgenden Bestandteilen mit folgenden Metall- und Siliciumanteilen bestehen:

| | |
|---|---|
| Eisenoxid | 3,0 Gew.-% bis 11,0 Gew.-% |
| Aluminiumoxid (Al₂O₃) | 8,0 Gew.-% bis 11,0 Gew.-% |
| Siliciumdioxid (SiO₂) | 23,5 Gew.-% bis 33,0 Gew.-% |
| Calciumoxid (CaO) | 4,0 Gew.-% bis 7,0 Gew.-% |
| Magnesiumoxid (MgO) | 1,0 Gew.-% bis 4,5 Gew.-% |

Das Eisenoxid umfasst insbesondere eine Mischung aus FeO und Fe₂O₃, wobei wiederum insbesondere FeO die Hauptkomponente an Eisenoxiden ist.

Hinsichtlich des anorganischen Filamentmaterials kommen insbesondere folgende Metall- und Siliciumanteile zur Anwendung:

| | |
|---|---|
| Eisenoxid | 5,0 Gew.-% bis 10,0 Gew.-% |
| Aluminiumoxid | 8,5 Gew.-% bis 10,0 Gew.-% |
| Siliciumdioxid | 23,5 Gew.-% bis 28,0 Gew.-% |
| Calciumoxid | 5,0 Gew.-% bis 6,5 Gew.-% |
| Magnesiumoxid | 2,0 Gew.-% bis 4,0 Gew.-% |

Weitere Bestandteile in Form von Metalloxiden in geringen Mengen können sein, und zwar in Bezug auf den jeweiligen Metallanteil:

| | |
|---|---|
| Titanoxid (TiO₂) | 0,0 Gew.-% bis 2,0 Gew.-%, |
| | insbesondere 0,0 Gew.-% bis 1,5 Gew.-% |
| Manganoxid (MnO) | 0,0 Gew.-% bis 1,0 Gew.-%, |
| | insbesondere 0,0 Gew.-% bis 0,5 Gew.-% |

Das anorganische Filamentmaterial besteht vorzugsweise zu ≥ 90 Gew.-%, insbesondere zu 95 Gew.-% bis 100 Gew.-%, aus natürlichem Basalt.

Die vorteilhaften Paramenter hinsichtlich der Filamente, Litzen und der Corde sind:

| | |
|---|---|
| Filamentstärke: | 5 µm bis 20 µm, insbesondere 6 µm bis 14 µm |
| maximale Längendifferenz einer Litze: | ≤ 2 % |
| Litzendrehung: | ≤ 75 tpm |
| Corddrehung: | ≤ 75 tpm |
| Corddicke: | 0,5 mm bis 2 mm |
| Cordart: | Gleichschlagcord |

Bei Gleichschlagcorden sind die Litzen und die Corde (oder Seile) in der gleichen Richtung gedreht. Im englischen Sprachraum bezeichnet man solche Corde (oder Seile) als Langschlagseile oder "Lang's twist". Diesbezüglich wird auf Klaus Feyrer, "Drahtseile: Bemessung, Betrieb, Sicherheit", Seiten 36, 37, Springerverlag, 2. Auflage 2000, verwiesen.

Die Kurzbezeichnung "tpm" bedeutet "turns per meter" und ist eine typische Einheit in der Textiltechnologie bei Drehungen aller Art. Die alternative Einheit ist auch "m⁻¹". Das Messgerät für die Drehung (Englische Bezeichnung "Twist") ist ein Drehungszähler Zweigle D314, und zwar bei einer Messvorschrift nach DIN ISO 2061. Dabei werden die Proben auf der Spule 24 Stunden im Normklima nach EN ISO 139 (20 °C, relative Luftfeuchte von 65 %) gelagert und anschließend ohne Trocknung gemessen.

Weitere vorteilhafte Gestaltungsmöglichkeiten des erfindungsgemäßen Antriebsriemens werden in Verbindung mit der Figurenbeschreibung noch näher vorgestellt.

Die Erfindung wird nun anhand von Ausführungsbeispielen unter Bezugnahme auf schematische Zeichnungen erläutert. Es zeigen:
Fig. 1 einen Zahnriemen;
Fig. 2 eine Litze, gebildet aus Filamenten.

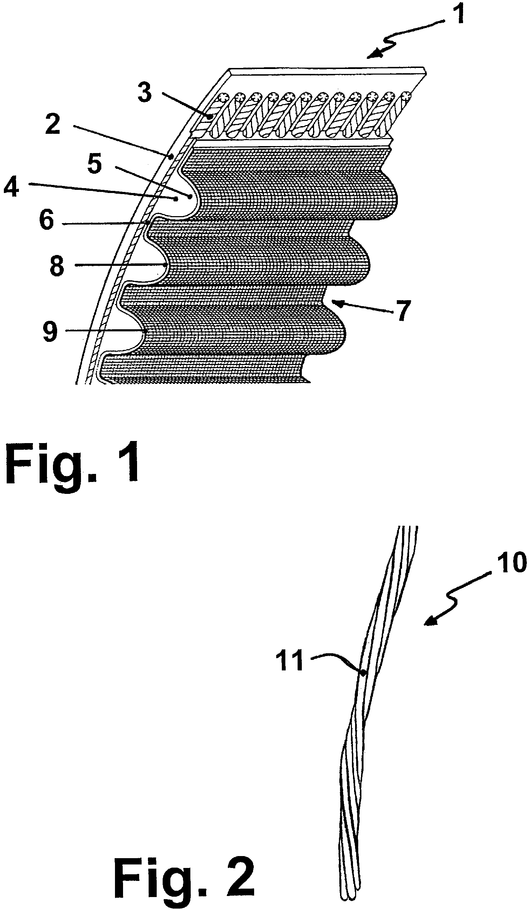

Fig. 1 zeigt einen Antriebsriemen 1 in Form eines Zahnriemens mit einer Decklage 2 als Riemenrücken, mit mehreren in Riemenlängsrichtung eingebetteten und parallel verlaufenden Zugsträngen 3 sowie mit einem Unterbau 4. Der Unterbau ist mit einer zahnförmigen Profilierung, umfassend Zähne 5 und Zahnstege 6, versehen und umfasst die Kraftübertragungszone 7.

Die Decklage 2 und der Unterbau 5 bilden dabei als Gesamteinheit den Grundkörper aus einem polymeren Werkstoff mit elastischen Eigenschaften, insbesondere in Form einer vulkanisierten Kautschukmischung, enthaltend wenigstens eine Kautschukkomponente und Mischungsingredienzien. Als Kautschukkomponente wird insbesondere Ethylen-Propylen-Kautschuk (EPM), Ethylen-Propylen-Dien-Kautschuk (EPDM), (teil)hydrierter Nitrilkautschuk (HNBR), Chloropren-Kautschuk (CR), Fluor-Kautschuk (FKM), Naturkautschuk (NR), Styrol-Butadien-Kautschuk (SBR) oder Butadien-Kautschuk (BR) eingesetzt, die unverschnitten oder mit wenigstens einer weiteren Kautschukkomponente, insbesondere mit einem der vorgenannten Kautschuktypen, verschnitten sind, beispielsweise in Form eines EPM/EPDM- oder SBR/BR-Verschnittes. Von besonderer Bedeutung ist dabei HNBR, EPM, EPDM oder ein EPM/EPDM-Verschnitt. Bei Zahnriemen wird wegen seiner Ölbeständigkeit insbesondere HNBR eingesetzt. Die Mischungsingredienzien umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe, beispielweise Fasern zwecks Verstärkung, und Farbpigmente. Diesbezüglich wird auf den allgemeinen Stand der Kautschukmischungstechnologie verwiesen. Auf das bevorzugte Einmischen von Fasern in die Kautschukmischung wird noch näher eingegangen.

Die Zugstränge 3 sind hier ohne Zwischenlage im Grundkörper eingebettet. Jeder Zugstrang in Cordkonstruktion ist aufgebaut aus einem anorganischen Filamentmaterial mit einer Zusammensetzung gemäß Kennzeichen des Anspruchs 1. Bei einem Zahnriemen in Ölumgebung sind dabei Gleichschlagcorde besser als normale Gegenschlagcorde. Weitere Zugstrangmaßnahmen werden in Verbindung mit der Fig. 2 noch näher erläutert.

Wenigstens der Unterbau 4 des Antriebsriemens 1 enthält möglichst gleichmäßig verteilt Fasern, insbesondere Textilfasern. Die Fasern bestehen aus Baumwolle, Zellulose, Aramid, insbesondere p-Aramid, Polyamid, insbesondere PA6 oder PA.6.6, Polyvinylacetal (PVA) oder Polyethylentherephthalat (PET). Die Fasern können in Form einer Pulpe (Faserbrei) oder in Kurzfasern vorliegen. Bei Kurzfasern beträgt die Läge ≤ 8 mm, insbesondere ≤ 6 mm.

Die Kraftübertragungszone 7 des Antriebsriemens 1 ist besonders verschleißanfällig durch Abrieb, Hitze und den Einfluss durch Öle. Aus diesem Grunde wird die Kraftübertragungszone zumeist mit einer Textilauflage 8, beispielsweise in Form eines Gewebes, Gewirkes oder Gestrickes, versehen. Diese Textilauflage wird beispielsweise nach der Lehre des Dokumentes WO 2005/080821 A1 zusätzlich mit einem fluorhaltigen Kunststoff, der insbesondere Polytetrafluorethylen (PTFE) ist, getränkt, und zwar bei einem hohen Füllungsgrad dieses Kunststoffes, wobei gleichzeitig eine Polymerbeschichtung (Versiegelung) als zusätzliche ölbeständige Schutzschicht 9 gebildet wird. Die beiden Teilschichten 8 und 9 mit unterschiedlichen Funktionen treten hier als gemeinsame Schutzschicht auf.

Auch die Decklage 2 des Antriebsriemens 1 kann mit einer Textilauflage versehen werden, beispielsweise in der oben beschriebenen Art.

Der Antriebsriemen 1 in seiner besonderen Ausführung als Zahnriemen ist besonders dafür geeignet, eine Ölpumpe eines Motors, beispielsweise eines KFZ-Motors, anzutreiben.

Fig. 2 zeigt eine Litze 10, gebildet aus einer Gruppe von Filamenten 11, wobei 100 bis 1000 Filamente, insbesondere 500 bis 700 Filamente, eine Litze bilden. Die Litze liegt dabei zumeist als Litzenhelix vor, was in der Fig. 2 verdeutlicht wird. Eine Gruppe von Litzen bildet schließlich den Cord. Zumeist besteht ein Cord aus wenigstens fünf Litzen, insbesondere aus 10 bis 20 Litzen.

Die Filamente 11 bestehen aus einem anorganischen Material gemäß der Zusammensetzung nach Anspruch 1. Dies bedeutet, dass somit auch die Litzen 10 und schließlich der Cord als wirksamer Zugstrang 3 (Fig. 1) aus diesem anorganischen Material bestehen.

Die Filamente 11, die Litzen 10 oder der Cord können präpariert sein. Häufig wird der Cord haftfreundlich präpariert, beispielsweise mit RFL.

Besonders zweckmäßig ist es, wenn bereits die Filamente 11 präpariert werden, so dass sich präparierte Litzen 10 und letztlich auch ein präparierter Cord bilden. Die Präparation der Filamente erfolgt dabei insbesondere mit einem polymeren Werkstoff unter Ausbildung einer Filamentummantelung. Die Polymerbasis richtet sich dabei vorzugsweise nach dem Grundkörperwerkstoff des Antriebsriemens. Besteht beispielsweise der Grundkörper auf einer Kautschukmischung auf der Basis von HNBR, so bildet auch HNBR die Polymerbasis der Ummantelung, insbesondere unter Einsatz einer Gummilösung. Neben der Zugkrafteigenschaft des Cordes auf der Basis eines anorganischen Materials werden hier zusätzlich Elastizität und Haftfreundlichkeit in die Cordkonstruktion eingebracht.

### Bezugszeichenliste

### (Teil der Beschreibung)

- 1: Antriebsriemen (Zahnriemen)
- 2: Decklage als Riemenrücken
- 3: Zugstrang
- 4: Unterbau
- 5: Zahn
- 6: Zahnsteg
- 7: Kraftübertragungszone
- 8: Textilauflage (Zahnauflage)
- 9: Schutzschicht
- 10: Litze
- 11: Filament

## Patentansprüche

1. Antriebsriemen (1) mit einem Grundkörper aus einem polymeren Werkstoff mit elastischen Eigenschaften, umfassend eine Decklage (2) als Riemenrücken sowie einen Unterbau (4) mit einer Kraftübertragungszone (7), wobei
- nach einer ersten Variante in dem Grundkörper wenigstens ein Zugstrang (3) in Cordkonstruktion eingebettet ist oder
- nach einer zweiten Variante zwischen der Decklage und dem Unterbau eine Zwischenlage aus einem polymeren Werkstoff mit elastischen Eigenschaften angeordnet ist, wobei in der Zwischenlage wenigstens ein Zugstrang in Cordkonstruktion eingebettet ist; oder
- nach einer dritten Variante wenigstens ein Zugstrang in Cordkonstruktion eine Cordlage bildet, wobei zwischen der Cordlage und der Decklage und/oder zwischen der Cordlage und dem Unterbau eine Zwischenlage aus einem polymeren Werkstoff mit elastischen Eigenschaften angeordnet ist;
wobei die Cordkonstruktion eines Zugstranges (3) auf einer Gruppe von anorganischen Filamenten (11), basiert, die eine Litze (10) bilden, wobei wiederum eine Gruppe von Litzen den Cord bilden, wobei das anorganische Filamentmaterial ein Gemisch aus Metall- und Siliciumoxiden ist;
**dadurch gekennzeichnet, dass**
- die Litzen (10) eines Cordes eine maximale Längendifferenz von ≤ 3 % aufweisen und
- die Filamente (11) aus wenigstens folgenden Bestandteilen mit folgenden Metall- und Siliciumanteilen bestehen:
| | |
|---|---|
| Eisenoxid | 3,0 Gew.-% bis 11,0 Gew.-% |
| Aluminiumoxid | 8,0 Gew.-% bis 11,0 Gew.-% |
| Siliciumdioxid | 23,5 Gew.-% bis 33,0 Gew.-% |
| Calciumoxid | 4,0 Gew.-% bis 7,0 Gew.-% |
| Magnesiumoxid | 1,0 Gew.-% bis 4,5 Gew.-% |

2. Antriebsriemen nach Anspruch 1, **dadurch gekennzeichnet, dass** die Filamente (11) aus wenigstens folgenden Bestandteilen mit folgenden Metall- und Siliciumanteilen bestehen:
| | |
|---|---|
| Eisenoxid | 5,0 Gew.-% bis 10,0 Gew.-% |
| Aluminiumoxid | 8,5 Gew.-% bis 10,0 Gew.-% |
| Siliciumoxid | 23,5 Gew.-% bis 28,0 Gew.-% |
| Calciumoxid | 5,0 Gew.-% bis 6,5 Gew.-% |
| Magnesiumoxid | 2,0 Gew.-% bis 4,0 Gew.-% |

3. Antriebsriemen nach Anspruch 1 oder 2, **dadurch gekennzeichnet, dass** die Filamente (11) zu ≥ 90 Gew.-% aus natürlichem Basalt bestehen.

4. Antriebsriemen nach einem der Ansprüche 1 bis 3, **dadurch gekennzeichnet, dass** die Filamentstärke 5 µ bis 20 µ beträgt.

5. Antriebsriemen nach einem der Ansprüche 1 bis 4, **dadurch gekennzeichnet, dass** der Cord ein Gleichschlagcord ist.

6. Antriebsriemen nach einem der Ansprüche 1 bis 5, **dadurch gekennzeichnet, dass** die Litzendrehung ≤ 75 tpm beträgt.

7. Antriebsriemen nach einem der Ansprüche 1 bis 6, **dadurch gekennzeichnet, dass** die Corddrehung ≤ 75 tpm beträgt.

8. Antriebsriemen nach einem der Ansprüche 1 bis 7, **dadurch gekennzeichnet, dass** die Corddicke 0,5 mm bis 2 mm beträgt.

9. Antriebsriemen nach einem der Ansprüche 1 bis 8, **dadurch gekennzeichnet, dass** die Filamente (11), die Litzen (10) oder der Cord präpariert sind.

10. Antriebsriemen nach Anspruch 9, **dadurch gekennzeichnet, dass** die Filamente (11), die Litzen (10) oder der Cord mit einem polymeren Werkstoff unter Ausbildung einer Ummantelung präpariert sind.

11. Antriebsriemen nach einem der Ansprüche 1 bis 10, **dadurch gekennzeichnet, dass** der polymere Werkstoff der Decklage (2) und/oder des Unterbaus (4) und/oder der Zwischenlage für den Zugstrang (3) und/oder der Ummantelung nach Anspruch 10 eine vulkanisierte Kautschukmischung ist, enthaltend wenigstens eine Kautschukkomponente sowie Mischungsingredienzien.

12. Antriebsriemen nach Anspruch 11, **dadurch gekennzeichnet, dass** die Kautschukkomponente Ethylen-Propylen-Kautschuk (EPM), Ethylen-Propylen-Dien-Kautschuk (EPDM), (teil)hydrierter Nitrilkautschuk (HNBR), Chloropren-Kautschuk (CR), Fluor-Kautschuk (FKM), Naturkautschuk (NR), Styrol-Butadien-Kautschuk (SBR) oder ein Butadien-Kautschuk (BR) ist, die unverschnitten oder im Verschnitt mit wenigstens einer weiteren Kautschukkomponente, insbesondere in Verbindung mit einem der vorgenannten Kautschuktypen, zum Einsatz gelangen.

13. Antriebsriemen nach einem der Ansprüche 1 bis 12, **dadurch gekennzeichnet, dass** wenigstens der Unterbau (4) Fasern enthält.

14. Antriebsriemen nach einem der Ansprüche 1 bis 13, **dadurch gekennzeichnet, dass** wenigstens der Unterbau (4) ölbeständig ausgerüstet ist.

15. Antriebsriemen nach einem der Ansprüche 1 bis 14, insbesondere in Verbindung mit Anspruch 14, **dadurch gekennzeichnet, dass** der Antriebsriemen (1) eine Ölpumpe eines Motors antreibt.

16. Antriebsriemen nach einem der Ansprüche 1 bis 15, **dadurch gekennzeichnet, dass** der Antriebsriemen (1) als Zahnriemen ausgebildet ist.

## Claims

1. Drive belt (1) with a base made of a polymeric material with resilient properties, comprising an outer layer (2) as belt backing and a substructure (4) with a force-transmission zone (7), where
- according to a first variant there is at least one cord-structure tension member (3) embedded in the base or
- according to a second variant there is, arranged between the outer layer and the substructure, an intermediate layer made of a polymeric material with resilient properties, where there is at least one cord-structure tension member embedded in the intermediate layer; or
- according to a third variant at least one cord-structure tension member forms a cord layer, where, arranged between the cord layer and the outer layer and/or between the cord layer and the substructure, there is an intermediate layer made of a polymeric material with resilient properties;
where the cord structure of a tension member (3) is based on a group of inorganic filaments (11) which form a strand (10), where a group of strands in turn form the cord, where the inorganic filament material is a mixture of metal oxides and silicon oxides;
**characterized in that**
- the maximal length difference of the strands (10) of a cord is ≤ 3% and
- the filaments (11) are composed of at least the following constituents with the following proportions of metal and of silicon:
| | |
|---|---|
| iron oxide | from 3.0% by weight to 11.0% by weight |
| aluminium oxide | from 8.0% by weight to 11.0% by weight |
| silicon dioxide | from 23.5% by weight to 33.0% by weight |
| calcium oxide | from 4.0% by weight to 7.0% by weight |
| magnesium oxide | from 1.0% by weight to 4.5% by weight. |

2. Drive belt according to Claim 1, **characterized in that** the filaments (11) are composed of at least the following constituents with the following proportions of metal and of silicon:
| | |
|---|---|
| iron oxide | from 5.0% by weight to 10.0% by weight |
| aluminium oxide | from 8.5% by weight to 10.0% by weight |
| silicon oxide | from 23.5% by weight to 28.0% by weight |
| calcium oxide | from 5.0% by weight to 6.5% by weight |
| magnesium oxide | from 2.0% by weight to 4.0% by weight |

3. Drive belt according to Claim 1 or 2, **characterized in that** the filaments (11) are composed of ≥ 90% by weight of natural basalt.

4. Drive belt according to any of Claims 1 to 3, **characterized in that** the filament thickness is from 5 µm to 20 µm.

5. Drive belt according to any of Claims 1 to 4, **characterized in that** the cord is a lang-lay cord.

6. Drive belt according to any of Claims 1 to 5, **characterized in that** the strand twist is ≤ 75 tpm.

7. Drive belt according to any of Claims 1 to 6, **characterized in that** the cord twist is ≤ 75 tpm.

8. Drive belt according to any of Claims 1 to 7, **characterized in that** the cord thickness is from 0.5 mm to 2 mm.

9. Drive belt according to any of Claims 1 to 8, **characterized in that** the filaments (11), the strands (10) or the cord have been prepared.

10. Drive belt according to Claim 9, **characterized in that** the filaments (11), the strands (10) or the cord have been prepared with a polymeric material with formation of sheathing.

11. Drive belt according to any of Claims 1 to 10, **characterized in that** the polymeric material of the outer layer (2) and/or of the substructure (4) and/or of the intermediate layer for the tension member (3) and/or of the sheathing according to Claim 10 is a vulcanized rubber mixture comprising at least one rubber component, and also mixture ingredients.

12. Drive belt according to Claim 11, **characterized in that** the rubber component is ethylene-propylene rubber (EPM), ethylene-propylene-diene rubber (EPDM), (partially) hydrogenated nitrile rubber (HNBR), chloroprene rubber (CR), fluororubber (FKM), natural rubber (NR), styrene-butadiene rubber (SBR) or a butadiene rubber (BR), these being used unblended or in a blend with at least one other rubber component, in particular in conjunction with one of the abovementioned types of rubber.

13. Drive belt according to any of Claims 1 to 12, **characterized in that** at least the substructure (4) comprises fibres.

14. Drive belt according to any of Claims 1 to 13, **characterized in that** oil-resistant properties have been provided at least to the substructure (4).

15. Drive belt according to any of Claims 1 to 14, in particular in conjunction with Claim 14, **characterized in that** the drive belt (1) drives an oil pump of an engine.

16. Drive belt according to any of Claims 1 to 15, **characterized in that** the drive belt (1) takes the form of a toothed belt.

## Revendications

1. Courroie d'entraînement (1) dotée d'un corps de base en matériau polymère à propriétés élastiques et comprenant une couche de recouvrement (2) formant le dos de la courroie ainsi qu'une sous-structure (4) dotée d'une zone (7) de transfert de force,
dans une première variante, au moins un brin de traction (3) structuré en câble étant incorporé dans le corps de base,
dans une deuxième variante, une couche intermédiaire en un matériau polymère à propriétés élastiques étant disposée entre la couche de recouvrement et la sous-structure, au moins un brin de traction à structure en câble étant incorporé dans la couche intermédiaire,
dans une troisième variante, au moins un brin de traction à structure en câble formant une couche de câble, une couche intermédiaire en un matériau polymère à propriétés élastiques étant disposée entre la couche de câble et la couche de recouvrement et/ou entre la couche de câble et la sous-structure,
la structure en câble d'un brin de traction (3) étant basée sur un ensemble de filaments minéraux (11) qui forment une tresse (10), un ensemble de tresse formant le câble, le matériau minéral des filaments étant constitué d'un mélange d'oxydes de métaux et d'oxydes de silicium,
**caractérisée en ce que**
les tresses (10) d'un câble présentent une différence maximale de longueur de ≤ 3 % et
**en ce que** les filaments (11) sont constitués d'au moins les composants suivants avec les proportions suivantes de métaux et de silicium :
Oxyde de fer 3,0 % en poids à 11,0 % en poids
Oxyde d'aluminium 8,0 % en poids à 11,0 % en poids
Dioxyde de silicium 23,5 % en poids à 33,0 % en poids
Oxyde de calcium 4,0 % en poids à 7,0 % en poids
Oxyde de magnésium 1,0 % en poids à 4,5 % en poids

2. Courroie d'entraînement selon la revendication 1, **caractérisée en ce que** les filaments (11) sont constitués d'au moins les composants suivants qui présentent les proportions suivantes de métaux et de silicium :
Oxyde de fer 5,0 % en poids à 10,0 % en poids
Oxyde d'aluminium 8,5 % en poids à 10,0 % en poids
Dioxyde de silicium 23,5 % en poids à 28,0 % en poids
Oxyde de calcium 5,0 % en poids à 6,5 % en poids
Oxyde de magnésium 2,0 % en poids à 4,0 % en poids

3. Courroie d'entraînement selon les revendications 1 ou 2, **caractérisée en ce que** les filaments (11) sont constitués à ≥ 90 % en poids de basalte naturel.

4. Courroie d'entraînement selon l'une des revendications 1 à 3, **caractérisée en ce que** l'épaisseur des filaments est de 5 µm à 20 µm.

5. Courroie d'entraînement selon l'une des revendications 1 à 4, **caractérisée en ce que** le câble est un câble à fils parallèles.

6. Courroie d'entraînement selon l'une des revendications 1 à 5, **caractérisée en ce que** la torsion des tresses est ≤ 75 tours par mètre.

7. Courroie d'entraînement selon l'une des revendications 1 à 6, **caractérisée en ce que** la torsion du câble est de ≤ 75 tours par mètre.

8. Courroie d'entraînement selon l'une des revendications 1 à 7, **caractérisée en ce que** l'épaisseur du câble est de 0,5 mm à 2 mm.

9. Courroie d'entraînement selon l'une des revendications 1 à 8, **caractérisée en ce que** les filaments (11), les tresses (10) ou le câble sont préparés.

10. Courroie d'entraînement selon la revendication 9, **caractérisée en ce que** les filaments (11), les tresses (10) ou le câble sont préparés à l'aide d'un matériau polymère qui forme une enveloppe.

11. Courroie d'entraînement selon l'une des revendications 1 à 10, **caractérisée en ce que** le matériau polymère de la couche de recouvrement (2) et/ou de la sous-structure (4) et/ou de la couche intermédiaire du brin de traction (3) et/ou l'enveloppe selon la revendication 10 sont un mélange de caoutchouc vulcanisé contenant au moins un composant de caoutchouc ainsi que des ingrédients de mélange.

12. Courroie d'entraînement selon la revendication 11, **caractérisée en ce que** le composant de caoutchouc est un caoutchouc d'éthylène-propylène (EPM), un caoutchouc d'éthylène-propylène-diène (EPDM), un caoutchouc nitrile (partiellement) hydrogéné (HNBR), un caoutchouc au chloroprène (CR), un caoutchouc fluoré (FKM), un caoutchouc naturel (NR), un caoutchouc au styrène-butadiène (SBR) ou un caoutchouc au butadiène (BR) qui sont utilisés purs ou en mélange avec au moins un autre composant de caoutchouc, en particulier en association avec un des types de caoutchouc cités plus haut.

13. Courroie d'entraînement selon l'une des revendications 1 à 12, **caractérisée en ce qu'**au moins la sous-structure (4) contient des fibres.

14. Courroie d'entraînement selon l'une des revendications 1 à 13, **caractérisée en ce qu'**au moins la sous-structure (4) est rendue résistante aux huiles.

15. Courroie d'entraînement selon l'une des revendications 1 à 14, en particulier en association avec la revendication 14, **caractérisée en ce que** la courroie d'entraînement (1) entraîne la pompe à huile d'un moteur.

16. Courroie d'entraînement selon l'une des revendications 1 à 15, **caractérisée en ce que** la courroie d'entraînement (1) est configurée comme courroie crantée.
